# EUROPÄISCHE PATENTSCHRIFT

(11) **EP 2 845 292 B1**
(45) Veröffentlichungstag und Bekanntmachung des Hinweises auf die Patenterteilung: **03.10.2018**
(21) Anmeldenummer: 12732617.1
(22) Anmeldetag: 27.06.2012
(51) Int. Cl.: H02K 1/18

(54) **SCHWINGUNGSTECHNISCHE ENTKOPPLUNG DES STATORS EINER ELEKTRISCHEN MASCHINE**
VIBRATIONAL DECOUPLING OF THE STATOR OF AN ELECTRIC MACHINE
DÉCOUPLAGE ANTI-VIBRATIONS DU STATOR D'UNE MACHINE ÉLECTRIQUE

(43) Veröffentlichungstag der Anmeldung: 11.03.2015
(73) Patentinhaber: Siemens Aktiengesellschaft, 80333 München (DE)
(72) Erfinder: BALZER, Christoph, 12163 Berlin (DE); SIEGL, Günther, 13439 Berlin (DE)
(86) Internationale Anmeldenummer: PCT/EP2012/062468
(87) Internationale Veröffentlichungsnummer: WO 2014/000789

(56) Entgegenhaltungen:
- DE-A1- 3 923 523
- DE-B- 1 137 120
- FR-A1- 2 465 096

## Beschreibung

Die Erfindung betrifft eine elektrische Maschine mit einem Gehäuse und einem zylindrischen Stator, zumindest einer Platte, welche jeweils auf der dem Gehäuse zugewandten Seite des zylindrischen Stators befestigt ist, wobei zwischen dem Gehäuse und der jeweiligen Platte in radialer Richtung ein Spalt angeordnet ist, sowie zumindest einem Verbindungselement, welches jeweils sowohl am Gehäuse als auch an der zumindest einen Platte befestigt ist und mittels welchem Kräfte vom zylindrischen Stator an das Gehäuse übertragbar sind, wobei das Gehäuse zumindest eine Führungsbuchse aufweist, durch welche das jeweilige Verbindungselement hindurchführbar ist und mittels welcher das jeweilige Verbindungselement ausrichtbar ist.

Bei einer derartigen elektrischen Maschine wird der Stator oftmals in das Maschinengehäuse eingeschweißt, wodurch Schwingungen und Körperschall auf die Gehäusestruktur übertragen werden können. Wird das Maschinengehäuse auf einer Anlage befestigt, können unter den Füßen des Maschinengehäuses Schwingungsdämpfer angebracht werden, so dass das Maschinengehäuse und der starr mit dem Maschinengehäuse verbundene Stator von der restlichen Anlage entkoppelt sind.

Um den Stator vom Maschinengehäuse zu entkoppeln, ist bekannt, das Statorblechpaket beispielsweise an Blattfedern oder auf speziellen Dämpfern innerhalb des Maschinengehäuses aufzuhängen. Somit gibt es keine ungefederte bzw. ungedämpfte Verbindung zwischen dem Stator und dem Maschinengehäuse.

Beispielsweise ist aus der DE 196 33 421 A1 eine Schiffsantriebsanlage mit einem Antriebsmotor bekannt, welcher einen Stator und einem Rotor aufweist. Der Rotor ist drehbar gelagert mit einem Tragrahmen verbunden und der Stator weist Füße auf, welche jeweils über ein elastisches Federelement mit dem Tragrahmen verbunden sind.

Aus der DE 39 23 523 A1 ist eine horizontalachsige elektrische Maschine aufweisend einen Statorblechkörper mit einem Austrag Ringen und axialen Tragbalken bestehenden Stator Kurswert versehen, dass mittels einer Bolzenanordnung in einem Gehäuse aufgehängt ist. Die Aufhängung ist dabei derart ausgebildet, dass sie in Axialrichtung nachgiebig, in Radial- und Umfangsrichtung aber steif ist.

Aus der DE 1 137 120 B ist eine Vorrichtung zur schwingungsfähigen Befestigung des Ständerblechpaketes im Gehäuse elektrischer Maschinen bekannt.

Aus der FR 2 465 096 A1 ist ein Gehäuse für einen hydraulischen Alternator bekannt, welches ein zylindrisches Außenteil und ein zylindrisches Innenteil mit einem Freiraum dazwischen aufweist, wobei sowohl das Außenteil als auch das Innenteil Versteifungselemente und in axialer Richtung verlaufende Traversen aufweisen, an welchen jeweils die Enden von Verbindungsblättern befestigt sind, welche derart federartig ausgestaltet sind, dass eine mechanisch elastische Verbindung zwischen dem Außenteil und dem Innenteil gewährleistet wird.

Der Erfindung liegt die Aufgabe zugrunde, die schwingungstechnischen Eigenschaften einer elektrischen Maschine zu verbessern.

Diese Aufgabe wird durch eine elektrische Maschine der eingangs genannten Art durch zumindest ein Dämpfungselement, welches jeweils zwischen dem zumindest einen Verbindungselement und dem Gehäuse angeordnet ist, gelöst, wobei zumindest eine der Führungsbuchsen einen Steg aufweist, wobei eine Bohrung in den Steg eingebracht ist und wobei mittels eines in die Bohrung eingebrachten Ausrichtelementes das jeweilige Verbindungselement ausrichtbar ist.

Die zumindest eine Platte ist mit dem zylindrischen Stator verbunden und kann Kräfte und somit auch Schwingungen des Stators aufnehmen. Der zwischen dem Gehäuse und der zumindest einen Platte angeordnete Spalt verhindert, dass Schwingungen des Stators direkt an das Gehäuse weitergegeben werden. Vielmehr werden die Kräfte des Stators über die zumindest eine Platte mittels des zumindest einen Verbindungselementes in das Gehäuse geleitet, wobei die Schwingungen und der Köperschall des Stators durch das zumindest eine Dämpfungselement gedämpft werden. Das unerwünschte Weiterleiten von Schwingungen und insbesondere von Körperschall vom Stator an das Gehäuse kann somit wirkungsvoll unterdrückt werden.

Durch das Verwenden der zumindest einen Platte, welche auf dem Stator befestigt ist, können Kräfte wirksam vom Stator abgeführt werden. Insbesondere wenn die zumindest eine Platte auf einer im Vergleich zur Mantelfläche des zylindrischen Stators kleinen Auflagefläche auf dem Stator befestigt ist, ist eine besonders gute schwingungstechnische Entkopplung des Stators vom Gehäuse möglich. Gleichzeitig erlaubt das Freiliegen eines Großteils der Statoroberfläche eine besonders effektive Kühlung des Stators über den Spalt zwischen dem Gehäuse und dem Stator.

Die Entkopplung von Schwingungen kann weiter dadurch verbessert werden, dass die übertragende Fläche in das Maschinengehäuse möglichst gering gehalten wird. Dies kann beispielsweise mittels im Vergleich zur Mantelfläche des Stators bzw. Innenfläche des Gehäuses kleinen Verbindungselementen bzw. eine vergleichsweise kleine Anzahl von Verbindungselementen erreicht werden. Durch den einfachen Aufbau kann insgesamt die Zahl der zur Befestigung des Stators benötigten Elemente im Vergleich zu bekannten elektrischen Maschinen deutlich reduziert werden.

Das zumindest eine Verbindungselement kann beispielsweise an die jeweilige Platte angeschweißt werden, insbesondere wenn das zumindest eine Verbindungselement in das Gehäuse eingreift. Dazu wird zunächst die zumindest eine Platte auf dem Stator befestigt und der Stator anschließend in das Gehäuse eingebracht. Schließlich wird das zumindest eine Verbindungselement auf der jeweiligen Platte festgeschweißt.

Die zumindest eine Führungsbuchse ist mit dem Gehäuse verbunden und nimmt sowohl das jeweilige Verbindungselement als auch das jeweilige Dämpfungselement auf. Somit werden Kräfte des Stators über die zumindest eine Platte, das jeweilige Verbindungselement, das jeweilige Dämpfungselement und schließlich über die zumindest eine Führungsbuchse in das Gehäuse geleitet, wobei Schwingungen und Körperschall des Stators durch das jeweilige Dämpfungselement wirkungsvoll gedämpft wird.

Durch das Verwenden von Führungsbuchsen wird weiterhin sichergestellt, dass die Verbindungselemente vergleichsweise klein sind und dadurch die Schwingungen übertragende Fläche zwischen dem Stator und dem Gehäuse vergleichsweise klein ist, was zu einer guten Entkopplung des Stators führt. Eine besonders gute schwingungstechnische Isolierung des Stators lässt sich durch an die Führungsbuchse und an die Verbindungselemente angepasste Dämpfungselemente erreichen.

Die zumindest eine Führungsbuchse erlaubt eine Justierung des Verbindungselements sowohl in tangentialer als auch in radialer Richtung, so dass beim Verwenden von mehreren Führungsbuchsen der Stator innerhalb des Gehäuses ausgerichtet werden kann. Gleichzeitig ist das zumindest eine Verbindungselement besonders leicht in der zumindest einen Führungsbuchse zu befestigen, was Bedingung für eine kostengünstige Automatisierung der Herstellung der elektrischen Maschine ist. Außerdem wird durch die zumindest eine Führungsbuchse die Möglichkeit einer besonders einfachen Reparatur der elektrischen Maschine eröffnet, beispielsweise indem im Schadensfall des Stators der Stator besonders leicht ausgetauscht werden kann.

Werden unterschiedliche Platten und unterschiedliche Verbindungselemente für verschiedene elektrische Maschinen verwendet, so kann ein Baukasten von elektrischen Maschinen entwickelt werden, wobei der Baukasten ausgehend von einer bestimmten Gehäusegröße den Einbau von unterschiedlichen Statoren ermöglicht. Dabei können die einzelnen Statoren sich beispielsweise in Durchmesser oder Länge unterscheiden und dennoch in das gleiche Gehäuse eingebaut werden, was eine besonders wirtschaftliche Herstellung von elektrischen Maschinen ermöglicht.

Anhand des in die Bohrungen eingebrachten Ausrichtelementes können besonders große Kräfte auf die zumindest eine Führungsbuchse ausgeübt werden, wodurch das zumindest eine Verbindungselement selbst nach der Montage der elektrischen Maschine noch ausrichtbar ist. Das Ausrichtelement kann beispielsweise auf dem Gehäuse der elektrischen Maschine oder auf einem Bezugspunkt außerhalb der elektrischen Maschine aufliegen und somit Kräfte vom Gehäuse oder dem Bezugspunkt auf die jeweilige Führungsbuchse ausüben.

Insbesondere können die Bohrung als Gewindebohrung und das Verbindungselement als Schraube ausgeführt sein, welche in die Gewindebohrung eingeschraubt ist, so dass die jeweilige Führungsbuchse durch Drehen der Schraube entlang der Richtung der Achse der Schraube ausgerichtet werden kann. Selbstverständlich können auch mehrere Bohrungen an einer Führungsbuchse angebracht sein, wobei die Bohrungen in unterschiedliche Richtungen weisen, so dass eine Ausrichtung der Führungsbuchse entlang unterschiedlicher Richtungen möglich ist.

Bei einer weiteren vorteilhaften Ausgestaltung der Erfindung sind zumindest zwei, jeweils in axialer Richtung voneinander beabstandete Platten vorgesehen, wobei zumindest eine in axialer Richtung verlaufende Rippe vorgesehen ist, welche die zumindest zwei Platten verbindet, wobei die jeweilige Rippe in axialer Richtung in eine Öffnung der jeweiligen Platte eingreift, und wobei jeweils zumindest eines der Verbindungselemente an der jeweiligen Rippe befestigt ist.

Die zumindest zwei Platten weisen jeweils in axialer Richtung eine Öffnung auf, beispielsweise in Form einer Bohrung, wobei die zumindest zwei Platten durch eine Rippe verbunden sind, die in die Öffnung der jeweiligen Platte eingreift. Durch diese Anordnung wird erreicht, dass der Stator anhand von nur sehr wenigen Verbindungselementen mit dem Gehäuse verbunden werden kann, was zu einer besonders effektiven schwingungstechnischen Entkopplung des Stators vom Gehäuse führt.

Insbesondere können die zwei Platten mittels mehrerer Rippen miteinander verbunden werden, wobei bei besonders großer mechanischer Beanspruchung jede Rippe mittels mehrerer Verbindungselemente am Gehäuse befestigt werden kann. Denkbar sind auch mehrere Paare von Platten, wobei jedes Paar jeweils von einer Rippe verbunden wird, und wobei die Rippen in axialer Richtung verlaufen und an verschiedenen Positionen des Umfangs des Stators auf diesem befestigt sind. In Umfangsrichtung können diese Platten durch weitere, umlaufende Befestigungselemente verbunden werden, welche die Platten zusätzlich auf den Stator aufpresen. Wiederum kann jede Rippe mittels mehrerer Verbindungselemente am Gehäuse befestigt werden.

Bei einer weiteren vorteilhaften Ausgestaltung der Erfindung sind zwei Platten beidseits der axialen Mitte des zylindrischen Stators angeordnet und umschließen den zylindrischen Stator jeweils in Umfangsrichtung, wobei sich die Mantelfläche des zylindrischen Stators im geometrischen Sinn aus zwei zur Rotationsachse der elektrischen Maschine konzentrischen Mantelhälften zusammensetzt und jeweils eine Rippe radial weiter außen in Bezug auf die Mitte jeder der Mantelhälften angeordnet ist, wobei jeweils zwei Verbindungselemente an der jeweiligen Rippe befestigt sind.

Die beiden Platten sind auf dem Stator beispielsweise jeweils nahe seiner beiden axialen Enden befestigt, wobei die jeweilige Platte insbesondere als den zylindrischen Stator umschließender Ring ausgeführt sein kann. Der zylindrische Stator lässt sich gedanklich in zwei konzentrische Mantelhälften aufteilen, wobei zwei Rippen in Bezug auf die Statorachse diametral gegenüberliegend durch axiale Öffnungen der jeweiligen Platte mit derselben verbunden sind.

Somit weist die elektrische Maschine zwei Rippen auf, welche insgesamt durch vier Verbindungselemente mit dem Gehäuse verbunden sind. Dadurch wird sowohl eine stabile Aufhängung des Stators im Gehäuse erreicht, welche auch bei größerer mechanischer Beanspruchung standhält, als auch eine gute schwingungstechnische Entkopplung des Stators vom Gehäuse, so dass Schwingungen und insbesondere Körperschall des Stators vom Gehäuse isoliert werden.

Bei einer alternativen vorteilhaften Ausgestaltung der Erfindung sind zwei Platten beidseits der axialen Mitte des zylindrischen Stators angeordnet und umschließen den zylindrischen Stator jeweils in Umfangsrichtung, wobei sich die Mantelfläche des zylindrischen Stators im geometrischen Sinn aus vier zur Rotationsachse der elektrischen Maschine konzentrischen Mantelvierteln zusammensetzt und jeweils eine Rippe radial weiter außen in Bezug auf die Mitte jeder der Mantelviertel angeordnet ist, wobei jeweils zwei Verbindungselemente an der jeweiligen Rippe befestigt sind.

Die elektrische Maschine weist vier Rippen auf, die sich jeweils paarweise diametral in Bezug auf die Rotorachse gegenüber liegen, wobei in Umfangsrichtung benachbarte Rippen alle 90° angeordnet sind. Dies erlaubt eine besonders stabile Aufhängung des Stators im Gehäuse, welche auch größten mechanischen Beanspruchungen gewachsen ist. Dennoch wird eine zufriedenstellende schwingungstechnische Entkopplung des Stators vom Gehäuse gewährleistet, da der Stator in sämtliche Richtungen schwingen kann, ohne dass die Schwingungen an das Gehäuse übertragen werden.

Wenn das Maschinengehäuse quaderförmig ist, lässt sich ein weiterer Vorteil durch eine besonders günstige, platzsparende Raumausnutzung dadurch erreichen, dass die Rippen und insbesondere die Verbindungselemente in den vier Ecken des Gehäuses angeordnet sind. Eine derartige Maschine ist vergleichsweise kompakt und weist gleichzeitig günstige schwingungstechnische Eigenschaften auf.

Bei einer weiteren vorteilhaften Ausgestaltung der Erfindung ist das jeweilige Verbindungselement als Stift ausgeführt und greift in eine Aussparung der jeweiligen Rippe ein, wobei das jeweilige Verbindungselement eine Verjüngung aufweist und das jeweilige Dämpfungselement an der axialen Oberfläche der Verjüngung aufliegt.

Aufgrund seiner punktförmigen Ausdehnung in Bezug auf die Schwingungen übertragende Fläche erlaubt die Ausführung des Verbindungselements als Stift eine besonders effektive schwingungstechnische Entkopplung des Stators vom Gehäuse. Der Stift ist derart ausgeführt, dass er einen ersten Bereich mit einem kleineren Durchmesser und einen zweiten Bereich mit einem größeren Durchmesser aufweist, wobei der Stift beispielsweise so montiert wird, dass der zweite Bereich radial weiter innen in der elektrischen Maschine angeordnet ist. Dadurch wird ermöglicht, dass das jeweilige Dämpfungselement auf dem Stift am Übergang vom zweiten zum ersten Bereich aufliegt, wodurch das jeweilige Dämpfungselement besonders gut Schwingungen in radialer Richtung bezüglich des zylindrischen Stators aufnehmen und dank des Dämpfungselementes dämpfen kann. Zusätzlich kann der Stift samt dem jeweiligen Dämpfungselement auch tangentiale Kräfte und Schwingungen aufnehmen und dämpfen.

Bei einer weiteren vorteilhaften Ausgestaltung der Erfindung ist das jeweilige Verbindungselement mittels einer Schraubverbindung oder einer Schweißverbindung an der jeweiligen Rippe befestigt.

Durch die Befestigung des jeweiligen Verbindungselementes an der jeweiligen Rippe mittels einer Schraubverbindung oder einer Schweißverbindung wird eine besonders einfache Montage ermöglicht, insbesondere wenn der Stator mit aufgebrachten Platten und Verbindungselementen quer zur Statorachse eine größere Abmessung als die Innenmaße des Gehäuses aufweist, beispielsweise wenn die Verbindungselemente in das Gehäuse hineinragen. Zunächst kann somit der Stator samt aufgebrachten Platten und darin befindlicher Rippe in das Gehäuse eingebracht werden und anschließend das jeweilige Verbindungselement von außen durch das Gehäuse nach innen mit der Rippe verbunden werden. Weil dieser Prozess besonders gut automatisiert werden kann, wird dadurch eine effiziente Herstellung der elektrischen Maschine erreicht. Wenn das jeweilige Verbindungselement mittels einer Schraubverbindung an der jeweiligen Rippe befestigt wird, weist die jeweilige Rippe an der jeweiligen Stelle eine entsprechende Gewindebohrung auf.

Bei einer weiteren vorteilhaften Ausgestaltung der Erfindung ist zumindest eines der Dämpfungselemente als Elastomer oder Ganzmetalldämpferelement ausgeführt.

Sowohl Elastomere als auch Ganzmetalldämpferelemente weisen gute Eigenschaften in Bezug auf Schwingungsdämpfung auf und sind dabei kostengünstig erhältlich. Je nach Anwendung kann es dabei von Vorteil sein, dass Elastomere elektrisch isolierend und Ganzmetalldämpferelemente elektrisch leitend sind.

Im Folgenden wird die Erfindung anhand der in den Figuren dargestellten Ausführungsbeispiele näher beschrieben und erläutert. Es zeigen:
- FIG 1: eine Schemazeichnung eines ersten Beispiels einer von der Erfindung nicht umfassten elektrischen Maschine,
- FIG 2: eine Schemazeichnung eines zweiten Beispiels einer von der Erfindung nicht umfassten elektrischen Maschine,
- FIG 3: einen Ausschnitt eines dritten Beispiels einer von der Erfindung nicht umfassten elektrischen Maschine, und
- FIG 4: einen Ausschnitt eines Ausführungsbeispiel einer erfindungsgemäßen elektrischen Maschine.

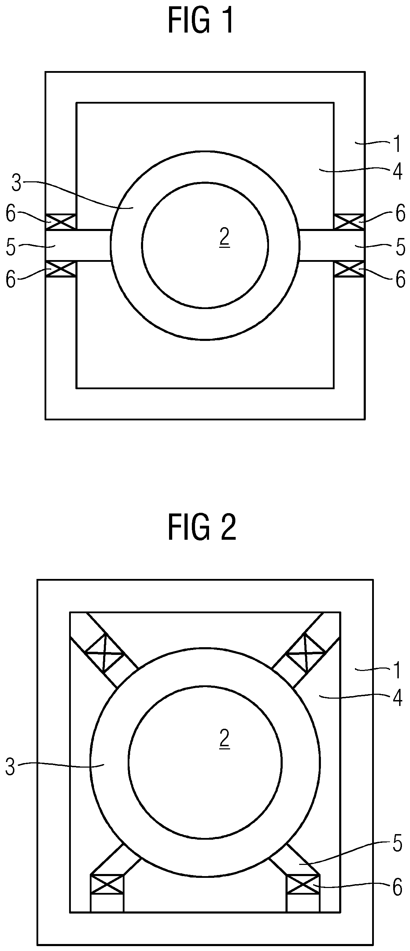

Figur 1 zeigt eine Schemazeichnung eines ersten Beispiels einer von der Erfindung nicht umfassten elektrischen Maschine. Die elektrische Maschine weist ein Gehäuse 1 auf, in welchem ein zylindrischer Stator 2 mit einer auf dem Stator 2 befestigten Platte 3 angeordnet sind. Zwischen der Platte 3 und dem Gehäuse 1 verbleibt ein Spalt 4 bzw. Hohlraum.

Der Stator 2 ist über die Platte 3 mit Verbindungselementen 5 verbunden, welche am Gehäuse 1 befestigt sind, wobei zwischen den Verbindungselementen 5 und dem Gehäuse 1 Dämpfungselemente 6 angeordnet sind. Die Dämpfungselemente 6 dämpfen Schwingungen und Körperschall, welche ansonsten vom Stator 2 an das Gehäuse 1 über die Platte 3 und die Verbindungselemente 5 übertragen würden, und bewirken somit eine gute schwingungstechnische Entkopplung Stators 2 vom Gehäuse 1. Nur durch die Verbindungselemente 5 sind die Platte 3 und der Stator 2 mittelbar über die Dämpfungselemente 6 in Kontakt mit dem Gehäuse 1, so dass Schwingungen und Körperschall des Stators 2 nicht an das Gehäuse 1 übertragen werden können.

Im Rahmen des Beispiels sind zwei Verbindungselemente 5 mit den zugehörigen Dämpfungselementen 6 vorgesehen, welche sich diametral gegenüber liegen. Denkbar ist auch, vier oder mehr Verbindungselemente 5 mit den zugehörigen Dämpfungselementen 6 vorzusehen, wobei sich die Verbindungselemente 5 paarweise diametral gegenüber liegen und wobei die einzelnen Paare entlang der Statorachse an verschiedenen Positionen angeordnet sind. Je nach Größe und Masse des Stators 2 und der mechanischen Tragfähigkeit der Verbindungselemente 5 und der Dämpfungselemente 6 kann die Anzahl der Verbindungselemente 5 und der zugehörigen Dämpfungselemente 6 größer oder kleiner gewählt werden, um sowohl eine genügend stabile Konstruktion der elektrischen Maschine zu gewährleisten als auch möglichst wenige Schwingungen und Körperschall übertragende Verbindungspunkte zwischen dem Stator 2 und dem Gehäuse 1 zu schaffen.

Figur 2 zeigt eine Schemazeichnung eines zweiten Beispiels einer von der Erfindung nicht umfassten elektrischen Maschine. Ein zylindrischer Stator 2 ist von einer Platte 3 umgeben, welche mittels vier Verbindungselementen 5 an einem quaderförmigen Gehäuse 1 befestigt ist, wobei sich zwischen dem Gehäuse 1 und der Platte 3 ein Spalt 4 befindet. Die Verbindungselemente 5 sind dem Gehäuse 1 jeweils mit über Dämpfungselemente 6 verbunden, welche Schwingungen und Körperschall dämpfen.

Die vier Verbindungselemente 5 sind paarweise diametral gegenüber liegend angeordnet, wobei die Verbindungselemente 5 jeweils alle 90° in Umfangsrichtung um den zylindrischen Stator 2 herum angeordnet sind. Dies erlaubt eine besonders platzsparende Befestigung des Stators 2 am Gehäuse 1, weil die Verbindungselemente 5 ungefähr in den vier Ecken der Innenseite des quaderförmigen Gehäuses 1 untergebracht sind.

Somit ist es möglich, zumindest die kleinere Seitenlänge eines Quaders mit rechteckigem Querschnitt nur minimal größer als den Durchmesser des Stators 2 samt aufgebrachter Platte 3 zu wählen.

Ferner kann, wie im vorliegenden Beispiel angedeutet, die Befestigung über die beiden unteren Verbindungselemente 5 in Form von zwei Standfüßen derart gestaltet sein, dass darüber größere Kräfte aufgenommen werden können als bei den beiden oberen Verbindungselementen 5. Dies ist besonders vorteilhaft, wenn das Gehäuse der elektrischen Maschine eine bevorzugte Einbaulage aufweist und es sich um eine elektrische Maschine mit einem vergleichsweise schweren Stator 2 handelt.

Weiterhin ist denkbar, dass mehrere Vierergruppen von Verbindungselementen 5 und zugehörigen Dämpfungselementen 6 dazu dienen, den Stator 2 mit dem Gehäuse 1 zu verbinden. Dabei ist jede Vierergruppe von Verbindungselementen 5 und zugehörigen Dämpfungselementen 6 an einer anderen Position entlang der Statorachse angeordnet.

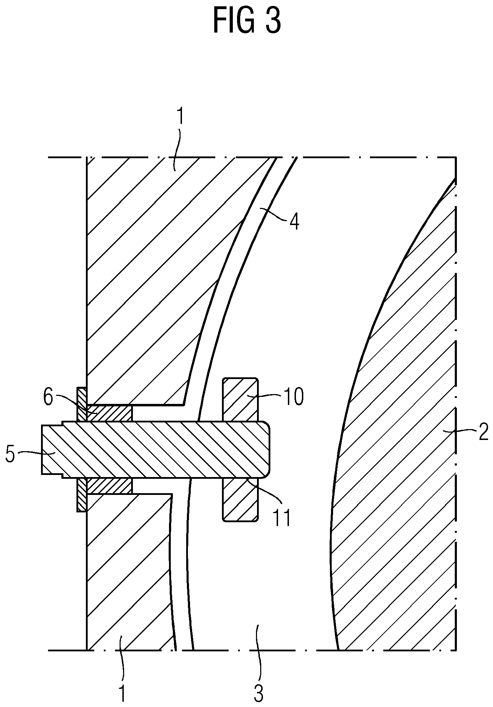

Figur 3 zeigt einen Ausschnitt eines dritten Beispiels einer von der Erfindung nicht umfassten elektrischen Maschine. Die elektrische Maschine weist ein Gehäuse 1 auf, welches über ein Dämpfungselement 6 mit einem Verbindungselement 5 verbunden ist. Dabei sind das Verbindungselement 5 als Stift und das Dämpfungselement 6 als Dämpfungsring, welcher den Stift in Umfangsrichtung umschließt, ausgeführt. Das Dämpfungselement 6 dämpft Schwingungen und Körperschall und sorgt für eine gute schwingungstechnische Entkopplung des Stators 2 vom Gehäuse 1.

Das Verbindungselement 5 weist nach radial innen in Bezug auf die elektrische Maschine und mündet in eine Platte 3, welche einen Stator 2 umschließt. In einer axial verlaufenden Öffnung der Platte 3 ist eine Rippe 10 angeordnet, wobei das Verbindungselement 5 in radialer Richtung durch die Rippe 3 hindurchgeführt wird und mit der Rippe 3 verbunden ist. Diese Verbindung kann beispielsweise als Schraubverbindung ausgeführt sein, so dass die Rippe 3 eine Gewindebohrung und das Verbindungselement 5 ein passendes Gewinde aufweist.

Die Rippe 10 kann dabei als Verbindung der Platte 3 zu einer weiteren (nicht dargestellten) Platte fungieren, wobei die beiden Platten 3 zwischen einander einen Abstand in axialer Richtung in Bezug auf die Statorachse aufweisen. Zwischen der Platte 3 und dem Gehäuse 1 ist weiterhin ein Spalt 4 angeordnet.

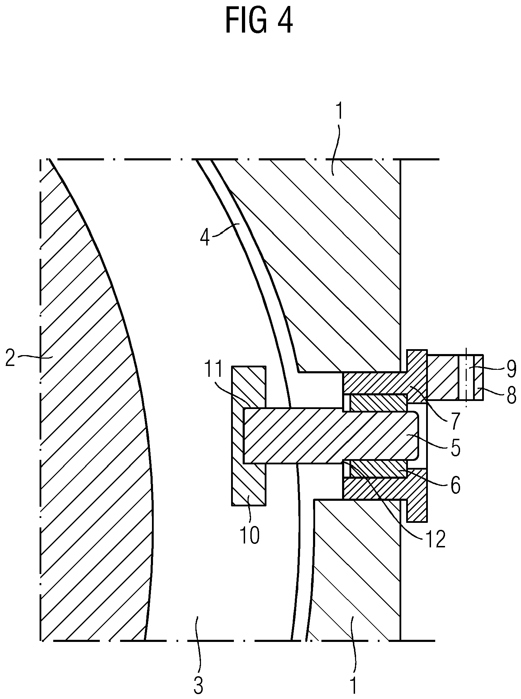

Figur 4 zeigt einen Ausschnitt eines Ausführungsbeispiels einer erfindungsgemäßen elektrischen Maschine. Die elektrische Maschine weist ein Gehäuse 1, einen zylindrischen Stator 2 und eine auf dem Stator 2 befestigte Platte 3 auf. Zwischen der Platte 3 und dem Gehäuse 1 verbleibt ein Spalt 4.

In der Platte 3 ist eine Rippe 10 angeordnet, welche sich in einer als geschlossene Nut ausgeführten, axial verlaufenden Öffnung der Platte 3 befindet. Die Rippe 10 kann dabei als Verbindung der Platte 3 zu einer weiteren (nicht dargestellten) Platte fungieren, wobei die beiden Platten 3 zwischen einander einen Abstand in axialer Richtung in Bezug auf die Statorachse aufweisen. Die Rippe 10 weist eine Aussparung 11 auf, in welche ein Verbindungselement 5 mündet, wobei das Verbindungselement 5 in radialer Richtung nach außen durch die Platte 3 hindurch eine Verbindung der Rippe 10 und somit der Platte 3 und des Stators 2 mit dem Gehäuse 1 herstellt. Die Aussparung 11 kann beispielsweise als Gewindebohrung ausgeführt werden, in welche das Verbindungselement 5 mit einem passenden Gewinde eingeschraubt werden kann. Alternativ ist denkbar, dass das Verbindungselement 5 mittels einer Schweißverbindung mit der Rippe 10 verbunden wird.

Um die Verbindung mit dem Gehäuse 1 herzustellen, wird das Verbindungselement 5 in eine Führungsbuchse 7 geführt, wobei die Führungsbuchse 7 im Gehäuse 1 befestigt ist und wobei zwischen dem Verbindungselement 5 und der Führungsbuchse 7 ein Dämpfungselement 6 angeordnet ist. Das Dämpfungselement 6 dämpft Schwingungen und Körperschall und sorgt für eine gute schwingungstechnische Entkopplung des Stators 2 vom Gehäuse 1.

Das Verbindungselement 5 weist dabei eine Verjüngung 12 auf, wobei das verjüngte Ende des Verbindungselementes 5 nach radial außen weist. Das Dämpfungselement 6 ist im Rahmen des Ausführungsbeispiels als Dämpfungsring ausgeführt, welcher nach radial innen im Bereich der Verjüngung 12 auf dem Verbindungselement 5 aufliegt und weiterhin das Verbindungselement 5 um dessen Umfang herum umschließt. Dadurch kann das Verbindungselement 5 über das Dämpfungselement 6 sowohl Kräfte in radialer als auch in tangentialer Richtung in Bezug auf die Statorachse der elektrischen Maschine an die Führungsbuchse 7 und somit an das Gehäuse 1 abgeben, wobei Schwingungen und Körperschall durch das Dämpfungselement 6 effektiv unterdrückt werden.

Die Führungsbuchse 7 weist einen nach radial außen weisenden Steg 8 auf, in welchen eine Bohrung 9 eingebracht ist. In die Bohrung 9 kann ein nicht dargestelltes Ausrichtelement eingeführt werden, welches sich beispielsweise auf dem Gehäuse 1 der elektrischen Maschine oder einem anderen Bezugspunkt abstürzt. Somit kann mithilfe des Steges 8 und des Ausrichtelementes die Führungsbuchse 7 auch nach der Montage der elektrischen Maschine in eine gewünschte Richtung bewegt werden, wodurch das Verbindungselement 5 und folglich auch der Stator 2 der elektrischen Maschine ausgerichtet werden kann.

Zusammenfassend betrifft die Erfindung eine elektrische Maschine mit einem Gehäuse und einem zylindrischen Stator, zumindest einer Platte, welche jeweils auf der dem Gehäuse zugewandten Seite des zylindrischen Stators befestigt ist, wobei zwischen dem Gehäuse und der jeweiligen Platte in radialer Richtung ein Spalt angeordnet ist, sowie zumindest einem Verbindungselement, welches jeweils sowohl am Gehäuse als auch an der zumindest einen Platte befestigt ist und mittels welchem Kräfte vom zylindrischen Stator an das Gehäuse übertragbar sind, wobei das Gehäuse zumindest eine Führungsbuchse aufweist, durch welche das jeweilige Verbindungselement hindurchführbar ist und mittels welcher das jeweilige Verbindungselement ausrichtbar ist. Um die schwingungstechnischen Eigenschaften einer elektrischen Maschine zu verbessern, wird vorgeschlagen, dass die elektrische Maschine zumindest ein Dämpfungselement, welches jeweils zwischen dem zumindest einen Verbindungselement und dem Gehäuse angeordnet ist, aufweist, wobei zumindest eine der Führungsbuchsen einen Steg aufweist, wobei eine Bohrung in den Steg eingebracht ist und wobei mittels eines in die Bohrung eingebrachten Ausrichtelementes das jeweilige Verbindungselement ausrichtbar ist.

## Patentansprüche

1. Elektrische Maschine mit
- einem Gehäuse (1) und
- einem zylindrischen Stator (2),
- zumindest einer Platte (3), welche jeweils auf der dem Gehäuse (1) zugewandten Seite des zylindrischen Stators (2) befestigt ist, wobei zwischen dem Gehäuse (1) und der jeweiligen Platte (3) in radialer Richtung ein Spalt (4) angeordnet ist,
- zumindest einem Verbindungselement (5), welches jeweils sowohl am Gehäuse (1) als auch an der zumindest einen Platte (3) befestigt ist und mittels welchem Kräfte vom zylindrischen Stator (2) an das Gehäuse (1) übertragbar sind,
wobei das Gehäuse (1) zumindest eine Führungsbuchse (7) aufweist, durch welche das jeweilige Verbindungselement (5) hindurchführbar ist und mittels welcher das jeweilige Verbindungselement (5) ausrichtbar ist,
**gekennzeichnet durch**
zumindest ein Dämpfungselement (6), welches jeweils zwischen dem zumindest einen Verbindungselement (5) und dem Gehäuse (1) angeordnet ist,
wobei zumindest eine der Führungsbuchsen (7) einen Steg (8) aufweist,
wobei eine Bohrung (9) in den Steg (8) eingebracht ist und wobei mittels eines in die Bohrung (9) eingebrachten Ausrichtelementes das jeweilige Verbindungselement (5) ausrichtbar ist.

2. Elektrische Maschine nach Anspruch 1,
wobei zumindest zwei, jeweils in axialer Richtung voneinander beabstandete Platten (3) vorgesehen sind,
wobei zumindest eine in axialer Richtung verlaufende Rippe (10) vorgesehen ist, welche die zumindest zwei Platten (3) verbindet,
wobei die jeweilige Rippe (10) in axialer Richtung in eine Öffnung der jeweiligen Platte (3) eingreift, und
wobei jeweils zumindest eines der Verbindungselemente (5) an der jeweiligen Rippe (10) befestigt ist.

3. Elektrische Maschine nach Anspruch 2,
wobei zwei Platten (3) beidseits der axialen Mitte des zylindrischen Stators (2) angeordnet sind und den zylindrischen Stator (2) jeweils in Umfangsrichtung umschließen,
wobei sich die Mantelfläche des zylindrischen Stators (2) im geometrischen Sinn aus zwei zur Rotationsachse der elektrischen Maschine konzentrischen Mantelhälften zusammensetzt und jeweils eine Rippe (10) radial weiter außen in Bezug auf die Mitte jeder der Mantelhälften angeordnet ist,
wobei jeweils zwei Verbindungselemente (5) an der jeweiligen Rippe (10) befestigt sind.

4. Elektrische Maschine nach Anspruch 2,
wobei zwei Platten (3) beidseits der axialen Mitte des zylindrischen Stators (2) angeordnet sind und den zylindrischen Stator (2) jeweils in Umfangsrichtung umschließen,
wobei sich die Mantelfläche des zylindrischen Stators (2) im geometrischen Sinn aus vier zur Rotationsachse der elektrischen Maschine konzentrischen Mantelvierteln zusammensetzt und jeweils eine Rippe (10) radial weiter außen in Bezug auf die Mitte jeder der Mantelviertel angeordnet ist,
wobei jeweils zwei Verbindungselemente (5) an der jeweiligen Rippe (10) befestigt sind.

5. Elektrische Maschine nach einem der Ansprüche 2-4,
wobei das jeweilige Verbindungselement (5) als Stift ausgeführt ist und in eine Aussparung (11) der jeweiligen Rippe (10) eingreift,
wobei das jeweilige Verbindungselement (5) eine Verjüngung (12) aufweist und das jeweilige Dämpfungselement (6) an der axialen Oberfläche der Verjüngung (12) aufliegt.

6. Elektrische Maschine nach einem der Ansprüche 2-5,
wobei das jeweilige Verbindungselement (5) mittels einer Schraubverbindung oder einer Schweißverbindung an der jeweiligen Rippe (10) befestigt ist.

7. Elektrische Maschine nach einem der vorhergehenden Ansprüche,
wobei zumindest eines der Dämpfungselemente (6) als Elastomer oder Ganzmetalldämpferelement ausgeführt ist.

## Claims

1. Electric machine comprising
- a housing (1) and
- a cylindrical stator (2)
- at least one panel (3) which is secured in each case to that side of the cylindrical stator (2) facing the housing (1), wherein a gap (4) is disposed in a radial direction between the housing (1) and the respective panel (3),
- at least one connecting element (5) which is secured in each case to both the housing (1) and the at least one panel (3) and by means of which forces can be transmitted from the cylindrical stator (2) to the housing (1),
wherein the housing (1) has at least one guide bush (7) through which the respective connecting element (5) can be fed and by means of which the respective connecting element (5) can be aligned,
**characterised by**
at least one damping element (6) which is arranged in each case between the at least one connecting element (5) and the housing (1),
wherein at least one of the guide bushes (7) has a ridge (8), wherein a hole (9) is incorporated in the ridge (8) and wherein the respective connecting element (5) can be aligned by means of an aligning element which is introduced into the hole (9).

2. Electric machine according to claim 1,
wherein provision is made for at least two panels (3) which are separated from each other in an axial direction in each case,
wherein provision is made for at least one rib (10) which runs in an axial direction and connects the at least two panels (3),
wherein the respective rib (10) engages in an opening of the respective panel (3) in an axial direction, and
wherein at least one of the connecting elements (5) is secured to the respective rib (10) in each case.

3. Electric machine according to claim 2,
wherein two panels (3) are arranged on either side of the axial centre of the cylindrical stator (2) and surround the cylindrical stator (2) in a circumferential direction in each case,
wherein the curved surface area of the cylindrical stator (2) is composed in geometric terms of two curved surface halves which are concentric relative to the rotational axis of the electric machine, and a rib (10) is arranged in each case radially further out relative to the centre of each of the curved surface halves,
wherein two connecting elements (5) are secured to the respective rib (10) in each case.

4. Electric machine according to claim 2,
wherein two panels (3) are arranged on either side of the axial centre of the cylindrical stator (2) and surround the cylindrical stator (2) in a circumferential direction in each case,
wherein the curved surface area of the cylindrical stator (2) is composed in geometric terms of four curved surface quarters which are concentric relative to the rotational axis of the electric machine, and a rib (10) is arranged in each case radially further out relative to the centre of each of the curved surface quarters,
wherein two connecting elements (5) are secured to the respective rib (10) in each case.

5. Electric machine according to one of claims 2 to 4, wherein the respective connecting element (5) is designed as a pin and engages in a recess (11) of the respective rib (10), wherein the respective connecting element (5) has a taper (12) and the respective damping element (6) rests on the axial surface of the taper (12).

6. Electric machine according to one of claims 2 to 5, wherein the respective connecting element (5) is secured to the respective rib (10) by means of a screw connection or a welded joint.

7. Electric machine according to one of the preceding claims,
wherein at least one of the damping elements (6) is embodied as an elastomer or an all-metal damper element.

## Revendications

1. Machine électrique, comprenant
- une enveloppe (1) et
- un stator (2) cylindrique,
- au moins une plaque (3), qui est fixée respectivement du côté, tourné vers l'enveloppe (1), du stator (2) cylindrique, un intervalle (4) étant prévu dans la direction radiale entre l'enveloppe (1) et la plaque (3) respective,
- au moins un élément (5) de liaison, qui est fixé respectivement à la fois à l'enveloppe (1) et à la au moins une plaque (3) et au moyen duquel des forces peuvent être transmises du stator (2) cylindrique à l'enveloppe (1),
dans laquelle l'enveloppe (1) a au moins une douille (7)
de guidage, dans laquelle peut passer l'élément (5) respectif de liaison et au moyen de laquelle l'élément (5) respectif de liaison peut être orienté,
**caractérisée par**
au moins un élément (6) d'amortissement, qui est disposé respectivement entre le au moins un élément (5) de liaison et l'enveloppe (1),
dans lequel au moins l'une des douilles (7) de guidage a un talon (8)
dans laquelle un alésage (9) est ménagé dans le talon (8) et dans laquelle, au moyen d'un élément d'orientation introduit dans l'alésage (9), l'élément (5) de liaison respectif peut être orienté.

2. Machine électrique suivant la revendication 1,
dans laquelle il est prévu au moins deux plaques (3) à distance l'une de l'autre dans la direction axiale,
dans laquelle il est prévu au moins une nervure (10), qui s'étend dans la direction axiale et qui relie les au moins deux plaques (3),
dans laquelle la nervure (10) respective pénètre dans la direction axiale dans une ouverture de la plaque (3) respective et
dans laquelle respectivement au moins l'un des éléments (5) de fixation est fixé à la nervure (10) respective.

3. Machine électrique suivant la revendication 2,
dans laquelle deux plaques (3) sont disposées de part et d'autre du milieu axial du stator (2) cylindrique et entourent le stator (2) cylindrique respectivement dans la direction du pourtour,
dans laquelle la surface latérale du stator (2) cylindrique est composée, au sens géométrique, de deux moitiés d'enveloppe concentriques à l'axe de rotation de la machine électrique et respectivement une nervure (10) est disposée radialement plus à l'extérieur que le milieu de chaque moitié d'enveloppe, dans laquelle respectivement deux éléments (5) de liaison sont fixés à la nervure (10) respective.

4. Machine électrique suivant la revendication 2,
dans laquelle deux plaques (3) sont disposées de part et d'autre du milieu axial du stator (2) cylindrique et entourent le stator (2) cylindrique respectivement dans la direction du pourtour,
dans laquelle la surface latérale du stator (2) cylindrique se compose, au sens géométrique, de quatre quarts d'enveloppe concentriques à l'axe de rotation de la machine électrique et respectivement une nervure (10) est disposée radialement plus à l'extérieur que le milieu de chaque quart d'enveloppe, dans laquelle respectivement deux éléments (5) de liaison sont fixés à la nervure (10) respective.

5. Machine électrique suivant l'une des revendications 2 à 4, dans laquelle l'élément (5) de liaison respectif est réalisé sous la forme d'une broche et pénètre dans un évidement (11) de la nervure (10) respective,
dans laquelle l'élément (5) de liaison respectif a un rétrécissement (12) et l'élément (6) d'amortissement respectif s'applique à la surface axiale du rétrécissement (12).

6. Machine électrique suivant l'une des revendications 2 à 5, dans laquelle l'élément (5) de liaison respectif est fixé au moyen d'un vissage ou d'un soudage à la nervure (10) respective.

7. Machine électrique suivant l'une des revendications précédentes,
dans laquelle au moins l'un des éléments (6) d'amortissement est réalisé sous la forme d'un élastomère ou d'un élément d'amortissement tout en métal.
